# EUROPÄISCHE PATENTSCHRIFT

(11) **EP 1 728 309 B1**
(45) Veröffentlichungstag und Bekanntmachung des Hinweises auf die Patenterteilung: **12.09.2007**
(21) Anmeldenummer: 05716303.2
(22) Anmeldetag: 22.03.2005
(51) Int. Cl.: H02K 41/02, H02K 1/18, H02K 9/10, H02K 9/16, H02K 9/19, H02K 15/095

(54) **FLACHSTATOR MIT FIXIERUNG VON POLSCHUHEN DURCH STATORGEHÄUSE**
FLAT STATOR COMPRISING FIXING OF POLE SHOES BY THE STATOR HOUSING
STATOR PLAT PRESENTANT DES PIECES POLAIRES FIXEES PAR L'INTERMEDIAIRE DU BOITIER DE STATOR

(30) Priorität: 23.03.2004 DE 102004014077
(43) Veröffentlichungstag der Anmeldung: 06.12.2006
(73) Patentinhaber: Intrasys GmbH Innovative Transport-Systeme, 80339 München (DE)
(72) Erfinder: ROSNER, Peter, 81371 München (DE); FERSCH, Konrad, 84091 Attenhofen (DE)
(74) Vertreter: Trossin, Hans-Jürgen
(86) Internationale Anmeldenummer: PCT/EP2005/003057
(87) Internationale Veröffentlichungsnummer: WO 2005/093932

(56) Entgegenhaltungen:
- DE-A1- 4 436 865
- DE-A1- 19 829 889
- DE-U1- 29 705 501

## Beschreibung

Die vorliegende Erfindung betrifft einen Stator für einen elektrischen Linearmotor oder für einen Lineargenerator, welcher Stator sich längs einer Statorlängsrichtung erstreckt, mit einer Läuferseite, weiche im montierten Zustand des Motors oder des Generators einem bewegten Läufer zugewandt ist, wobei der Stator umfasst:
- einen in Statorlängsrichtung verlaufenden Statorkern,
- eine Mehrzahl von in Statorlängsrichtung aufeinander folgenden und mit Abstand voneinander angeordneten Polschuhen, welche von dem Statorkem zur Läuferseite hin abstehen,
- eine Mehrzahl von in Statorlängsrichtung aufeinander folgenden und mit Abstand voneinander angeordneten Wickelspulen, welche zur Erzeugung eines elektromagnetischen Feldes mit einer Spannungsquelle verbunden oder verbindbar sind,
- einen Statorboden, welcher wenigstens eine längs der Statorlängsrichtung verlaufende Seitenwand und einen dieser benachbarten Bodenabschnitt umfasst und an welchem der Statorkern, die Polschuhe und die Wickelspulen aufgenommen sind,
wobei wenigstens ein Polschuh durch wenigstens ein Halteelement gegen ein Abheben vom Statorkem in Richtung zu der Läuferseite hin gesichert ist, welches Halteelement mit einem Eingriffsbereich des wenigstens einen Polschuhs zusammenwirkt.

Ein derartiger Stator ist beispielsweise aus der DE 200 16 641 U1 bekannt. Bei dem bekannten Stator sind an den in Statorquerrichtung weisenden Seiten des Statorkerns Halteelemente durch Schrauben angebracht, welche einen zu den Polschuhen hinweisenden Vorsprung aufweisen. Der Vorsprung greift in Ausnehmungen an den Polschuhen ein und hintergreift so einen Abschnitt der Polschuhe derart, dass der Vorsprung eine mechanische Barriere gegen ein Abheben des Polschuhs in Richtung vom Kern weg und zu der Läuferseite hin bildet. Dies ist notwending, da eine im Sinne eines Abhebens eines Polschuhs vom Statorkern in Richtung zu der Läuferseite hin wirkende Abhebekraft auftritt, wenn der Läufer mit den in ihm aufgenommenen Magneten sich über dem betreffenden Polschuh befindet oder über diesen hinweg verfährt.

Nachteilig an der bekannten Lösung ist die erhöhte Teileanzahl und damit verbunden der zusätzliche Montageaufwand für die Anbringung der Halteelemente.

Es ist demgegenüber Aufgabe der vorliegenden Erfindung, einen gattungsgemäßen Stator anzugeben, welcher bei gleichwertiger Lagefixierung der Polschuhe am Kern eine geringere Teileanzahl benötigt.

Diese Aufgabe wird erfindungsgemäß gelöst durch einen Stator mit allen Merkmalen des Anspruchs 1.

Erfindungsgemäß wird eine ohnehin vorhandene Seitenwand des Statorbodens als ein Halteelement verwendet. Hierzu ist ein Haltebereich an der Seitenwand ausgebildet. Der Eingriff von dem Haltebereich der wenigstens einen Seitenwand und dem Eingriffsbereich des wenigstens einen Polschuhs miteinander kann ein kraftschlüssiger oder ein formschlüssiger Eingriff sein. Als kraftschlüssiger Eingriff kann an einen Reibungseingriff gedacht sein, bei welchem ein Flächenabschnitt der Seitenwand unter Kraft gegen einen Anlagebereich des Polschuhs drückt. Der Flächenbereich der Seitenwand bildet dann den Haltebereich, der Anlagebereich des Polschuhs den Eingriffsbereich. Zur Verbesserung der Reibungswirkung kann einer oder vorzugsweise beide dieser Bereiche mit einem Reibbelag versehen sein.

Mit einer Begrenzung einer Bewegung zumindest des Eingriffsbereichs soll ausgesagt sein, dass sich andere Bereiche des wenigstens einen Polschuhs durchaus bewegen können, jedoch eine Bewegung gerade des Eingriffsbereichs vom Kern weg zu der Läuferseite hin begrenzt ist. "Begrenzt" bedeutet dabei, dass Bewegungen sehr geringen Ausmaßes auf Grund vorhandener Toleranzen, etwa auf Grund eines kleinen Abstandsspalts zwischen dem Eingriffsbereich und dem Haltebereich möglich sein können, vorzugsweise jedoch unterbunden sind.

Bevorzugt ist einer der Bereiche: Haltebereich oder Eingriffsbereich, jedoch in formschlüssigem Eingriff mit dem jeweils anderen Bereich. Bei formschlüssigem Eingriff zwischen den Bereichen ist eine Bewegung zumindest des Eingriffsbereichs, vorzugsweise des gesamten wenigstens einen Polschuhs, vom Kern weg und zu der Läuferseite hin durch eine körperliche Barriere verhindert oder zumindest behindert, was die gewünschte Bewegungsbegrenzung sicherer und gegen die zuvor genannten Abhebekräfte belastbarer macht.

In einer möglichen konstruktiven Ausgestaltung ist in einem Bereich: Haltebereich oder Eingriffsbereich, ein Vorsprung ausgebildet, welcher den jeweils anderen Bereich in Richtung zur Läuferseite hintergreift. Durch diese Maßnahme kann mit sehr einfachen Mitteln eine auch unter Einwirkung von sehr hohen Abhebekräften nicht nachgebende Begrenzung einer Bewegung zumindest des Eingriffsbereichs des wenigstens einen Polschuhs zu der Läuferseite hin erreicht werden.

In einem solchen Fall kann der Vorsprung eine Anschlagfläche aufweisen, während der jeweils andere Bereich eine Anlagefläche aufweist, wobei Anschlagfläche und Anlagefläche im montierten Zustand des Stators aufeinander zu weisen oder bevorzugt sogar spielfrei aneinander anliegen. Durch ein spielfreies Anliegen wird gewährleistet, dass der Eingriffsbereich des wenigstens einen Polschuhs keinerlei Bewegungsmöglichkeit vom Statorkern weg zu der Läuferseite hin hat.

Vorzugsweise ist der Vorsprung an dem Haltebereich der wenigstens einen Seitenwand ausgebildet, welcher dann den Eingriffsbereich des wenigstens einen Polschuhs hintergreift. Dadurch kann sichergestellt werden, dass die Seitenwand, welche im Falle eines Ausbildens des Vorsprungs am Eingriffsbereich für den formschlüssigen Eingriff unter Umständen mit Durchbrechungen versehen werden müsste, mit einer geschlossenen Außenfläche ausgebildet sein kann, und somit auch als Außenwand eines Statorgehäuses, insbesondere für ein Vergießen des Stators, genutzt werden kann.

Das Hintergreifen kann derart realisiert sein, dass der Vorsprung am Haltebereich den gesamten Polschuh hintergreift. Dies würde jedoch bei einem zumeist vorhandenen geschlossenen Statorgehäuse bedeuten, dass zur Läuferseite hin ein Spalt zwischen der Läuferseite und dem läuferseitennahen Endbereich des wenigstens einen Polschuhs verbleibt, was zu einer geringeren Nutzbarkeit des von den Wickelspulen erzeugten Magnetfelds führen kann. Vorteilhafter, weil diesen Spalt vermeidend, weist der jeweils andere, vom Vorsprung hintergriffene Eingriffsbereich eine Ausnehmung auf, in welche der Vorsprung zum formschlüssigen Eingriff hineinragt.

Gemäß einer bevorzugten Ausführungsform weist die wenigstens eine Seitenwand ein mit dem Bodenabschnitt verbundenes Ende, ein freies Ende und einen zwischen diesen Enden liegenden Schenkelbereich auf, wobei der Haltebereich ein das freie Ende der Seitenwand aufweisender, im Wesentlichen in Statorlängsrichtung verlaufender Endbereich der Seitenwand ist. In einem solchen Falle kann das freie Ende beispielsweise den zuvor erwähnten Reibbelag tragen. Weiterhin kann die dem Material des Statorbodens innewohnende Elastizität zur Aufbringung eines Anpressdrucks der Seitenwand an den Eingriffsbereich des wenigstens einen Polschuhs genutzt werden. Vorzugsweise bilden freies Ende, Schenkelbereich und mit dem Bodenabschnitt verbundenes Ende eine einstückige Seitenwand oder/und ist die wenigstens eine Seitenwand einstückig mit dem Bodenabschnitt des Statorbodens verbunden. Dadurch wird die Teileanzahl weiter reduziert.

Bei einer aus fertigungstechnischer Sicht besonders einfach und kostengünstig herzustellenden Weiterbildung der vorliegenden Erfindung mit gewünschtem formschlüssigen Eingriff von Haltebereich und Eingriffsbereich ist als der Vorsprung das freie Ende der wenigstens einen Seitenwand mit dem Haltebereich bezüglich des Schenkelbereichs zum wenigstens einen Polschuh hin durch Umformen, wie etwa Biegen, abgewinkelt.

Eine noch zuverlässigere Sicherung des wenigstens einen Polschuhs gegen ein Abheben vom Statorkem zur Läuferseite hin kann durch Vorsehen eines weiteren Halteelements erreicht werden, welches mit einem weiteren Eingriffsbereich des wenigstens einen Polschuhs zusammenwirkt.

Konstruktiv kann zur Verringerung der Teileanzahl ein Stator mit zwei Halteelementen derart ausgebildet sein, dass der Statorboden wenigstens zwei Seitenwände aufweist, wobei an einer Seitenwand ein Haltebereich als das Halteelement und an einer weiteren Seitenwand ein weiterer Haltebereich als das weitere Halteelement ausgebildet ist. Auch hier sind zur Verringerung der Teileanzahl die zwei je einen Haltebereich aufweisenden Seitenwände und der Bodenabschnitt des Statorbodens gemäß einer bevorzugten Weiterbildung der Erfindung einstückig ausgebildet. Die weitere Seitenwand kann wie die zuvor genannte Seitenwand ausgebildet sein.

Der wenigstens eine Polschuh kann sicher zwischen den beiden Seitenwänden in der Art einer zweiseitigen Einspannung gehalten werden, wenn die beiden Seitenwände im Wesentlichen parallel zueinander, vorzugsweise im Wesentlichen spiegelsymmetrisch zu einer in Statorlängsrichtung verlaufenden und orthogonal zum Bodenabschnitt orientierten Ebene vorgesehen sind. Dies verringert auch das Risiko eines Lösens des wenigstens einen Polschuhs vom Kern durch Drehung des wenigstens einen Polschuhs um eine dem Eingriffsbereich nahe und in Statorlängsrichtung verlaufende Drehachse. Dies ermöglicht eine Symmetrie der am Polschuh-Eingriffsbereich und am Seitenwand-Haltebereich auftretenden Kräfte und ist besonders dann vorteilhaft, wenn der wenigstens eine Polschuh ein längliches Element ist und der Eingriffsbereich an wenigstens einem seiner Längsenden vorgesehen ist.

Gemäß einer vorteilhaften Weiterbildung der vorliegenden Erfindung kann dann, wenn der wenigstens eine Polschuh zusätzlich zu dem Eingriffsbereich einen weiteren Eingriffsbereich aufweist, der Eingriffsbereich an einem der Längsenden des Polschuhs und der weitere Eingriffsbereich am jeweils entgegengesetzten Längsende des wenigstens einen Polschuhs vorgesehen sein. Dadurch liegen die Stellen, an welchen eine Haltekraft von dem Haltebereich und dem weiteren Haltebereich auf den wenigstens einen Polschuh einwirkt, weit auseinander, was eine Verlagerung des Polschuhs durch eine Drehung um eine in Statorlängsrichtung verlaufende Drehachse erschwert.

Die zuvor angesprochene vorteilhafte Ausbildung des Eingriffsbereichs mit einer Ausnehmung kann in einer fertigungstechnisch einfach und kostengünstig herzustellenden Ausführungsform eine in eine Polschuhseite eingebrachte Nut sein. Besonders bevorzugt ist der wenigstens eine Polschuh in seiner Längsrichtung im Wesentlichen orthogonal zur Statorlängsrichtung im Stator orientiert, wobei die Nut den Polschuh in Statorlängsrichtung durchsetzend in einer zu der wenigstens einen Seitenwand weisenden Polschuhseite vorgesehen ist. Dies ermöglicht eine einfache Montage des Polschuhs am Kern, etwa durch Aufsetzen des Polschuhs auf diesem, wobei die Polschuhlängsrichtung parallel zur Statorlängsrichtung verläuft, und anschließendes Drehen des Polschuhs um eine zur Läuferseite orthogonale Drehachse. Durch die den Polschuh in Statorlängsrichtung durchsetzende Ausbildung der Nut kann der an der Seitenwand ausgebildete Vorsprung, vorzugsweise die an den gegenüberliegenden Seitenwänden ausgebildeten Vorsprünge, einfach in die Nut eingedreht werden. Alternativ kann der Polschuh auch von einer Endseite des Stators aufgeschoben werden.

Es kann jedoch gewünscht sein, ein vormontiertes Kernpaket mit einem Statorkem und daran bereits angeordneten Polschuhen und Wickelspulen in einem Arbeitsgang am Statorboden anzuordnen. Deshalb kann gemäß einer vorteilhaften Ausführungsform der Stator derart ausgebildet sein, dass einer der Bereiche: Haltebereich oder Eingriffsbereich, eine Ausnehmung aufweist und der jeweils andere dieser Bereiche einen Vorsprung aufweist, welcher im montierten Zustand des Stators in einer ersten Einführrichtung in die Ausnehmung hineinragt, und dass ebenso einer der weiteren Bereiche: weiterer Haltebereich oder weiterer Eingriffsbereich, eine weitere Ausnehmung aufweist und der jeweils andere dieser weiteren Bereiche einen weiteren Vorsprung aufweist, welcher im montierten Zustand des Stators in einer zu der ersten Einführrichtung parallelen, jedoch entgegengesetzt gerichteten zweiten Einführrichtung in die weitere Ausnehmung hineinragt, wobei wenigstens ein Paar aus Ausnehmung und zugeordnetem Vorsprung derart bemessen sind, dass der Vorsprung dieses Paars in die ihm jeweils zugeordnete Ausnehmung soweit einführbar ist, dass der Vorsprung des jeweils anderen Paars und die diesem zugeordnete Ausnehmung derart anordenbar sind, dass sie außer Eingriff sind, jedoch in der zugeordneten Einführrichtung fluchten.

Mit dieser Ausgestaltung ist es möglich, den wenigstens einen Polschuh, gewünschtenfalls das zuvor erwähnte Kempaket, zunächst in einem seiner Eingriffsbereiche mit den zugeordneten Haltebereich in Eingriff zu bringen und dann den Polschuh bzw. das Kempaket derart zu positionieren, dass das jeweils andere Paar aus Vorsprung und Ausnehmung noch nicht in Eingriff miteinander gebracht sind, jedoch in der zu einem Eingriff führenden Einführrichtung fluchten, sodass ein Verschieben des Polschuhs parallel zu den Einführrichtungen einen formschlüssigen Eingriff des betreffenden Vorsprungs mit der betreffenden Ausnehmung bewirkt. Dadurch ist ein Zustand herstellbar, in dem beide Vorsprünge in die ihnen jeweils zugeordnete Ausnehmung hineinragen. Bei dem gerade beschriebenen Ausführungsbeispiel- bilden Haltebereich und Eingriffsbereich ein Paar und weiterer Haltebereich und weiterer Eingriffsbereich ein weiteres Paar. Vorsprung und Ausnehmung jeweils eines Paares sind einander zugeordnet. Bei dieser Ausführungsform erfordert die Anordnung dieses Polschuhs im Stator dann, wenn die Haltebereiche an je einer Seitenwand des Statorbodens ausgebildet sind und der Potschuh in Statorquerrichtung anzuordnen ist, sodass die Einführrichtungen im Wesentlichen mit der Statorquerrichtung zusammenfallen, zunächst eine Verschiebebewegung mit einer Verschiebekomponente in der ersten Einführrichtung, dann ein Verschwenken des Polschuhs um eine in Statorlängsrichtung verlaufende Schwenkachse und schließlich ein Verschieben des wenigstens einen Polschuhs in der zweiten Einführrichtung.

In einer bevorzugten Ausführungsform ist dies konstruktiv dadurch erreicht, dass der wenigstens eine Polschuh an zwei im Wesentlichen in entgegengesetzte Richtungen weisenden Polschuhseiten Nuten aufweist, welche sich jeweils in einer Nut-Tiefenrichtung von einem Nutrand an einer Außenfläche der zugeordneten Polschuhseite zu einem Nutgrund aufeinander zu erstrecken, wobei die Tiefe wenigstens einer der Nuten derart gewählt ist, dass der Abstand vom Nutgrund der wenigstens einen Nut zu dem läuferseitenfernen Nutrand der jeweils anderen Nut kleiner ist als die lichte Weite zwischen den Haltebereichen der einander gegenüberliegenden Seitenwände. Die Nuten können einfach in die Polschuhe eingefräst werden, die zugeordneten Vorsprünge können kostengünstig durch Abwinkeln von freien Enden der einander gegenüberliegenden Seitenwände des Statorbodens gebildet sein. Die zur Nut-Tiefenrichtung und im montierten Zustand zur Statorlängsrichtung im Wesentlichen orthogonale Nut-Breite solte derart gewählt sein, dass ein Verschwenken des Polschuhs bei in die Nut hineinragendem Vorsprung in eine in Statorlängsrichtung verlaufende Schwenkachse nicht behindert ist.

Um die Montage weiter zu erleichtern, kann die Tiefe beider Nuten derart gewählt sein, dass der Abstand vom Nutgrund der einen Nut zu dem läuferseitenfernen Nutrand der jeweils anderen Nut kleiner ist als die lichte Weite zwischen den Haltebereichen der einander gegenüberliegenden Seitenwände. Bei einer derartigen Ausgestaltung spielt es keine Rolle, auf welcher Seite eine Nut des Polschuhs an einem ihr zugeordneten Vorsprung zuerst angesetzt wird, um den Polschuh am Kern anzuordnen.

Zwar war im Vorhergehenden stets von wenigstens einem Polschuh die Rede, welcher erfindungsgemäß gegen ein Abheben vom Kern zur Läuferseite hin gesichert werden soll, da es jedoch vorteilhaft ist, einen Stator mit hoher Verfügbarkeit zu erhalten, sind vorzugsweise eine Mehrzahl von Polschuhen, vorzugsweise alle Polschuhe, durch wenigstens einen Haltebereich, besonders bevorzugt durch zwei Haltebereiche, gegen ein Abheben vom Statorkern in Richtung zu der Läuferseite hin gesichert.

Weiterhin sind Wickelspulen häufig derart im Stator angeordnet, dass sie lediglich an einer Seite des Statorkerns anliegen. Die Wirkung des von den Wickelspulen erzeugten Magnetfelds kann jedoch verbessert werden, indem die Wickelspulen derart ausgebildet sind, dass sie den Statorkern umgeben und ein Abschnitt der Wickelspulen zwischen zwei Polschuhen verläuft.

Eine besonders geringe Teileanzahl ergibt sich weiterhin dann, wenn der Statorboden Teil eines Statorgehäuses ist. Dann dient das ohnehin vorhandene Statorgehäuse, bzw. ein Teil desselben, zur Fixierung der Polschuhe im Stator gegen ein Abheben derselben zur Läuferseite hin.

Die vorliegende Erfindung wird im Folgenden anhand von Zeichnungen näher erläutert. Es stellt dar:
- Fig. 1: die Fig. 1a, 1b und 1c zeigen Drahtmodellansichten des erfindungsgemäßen Stators von der Seite, von vorne bzw. von oben,
- Fig. 2: eine Explosionsansicht des erfindungsgemäßen Stators,
- Fig. 3: Fig. 3a, 3b und 3c zeigen den Vorgang eines Anordnens eines Polschuhs an einem Statorkem bei einer bevorzugten Ausführungsform der Erfindung in einem Schnitt entlang der Linie III-III in Fig. 1, sowie
- Fig. 4: ein Kernpaket eines erfindungsgemäßen Statorkerns, umfassend einen Statorkern, Polschuhe und Spulenkörper.

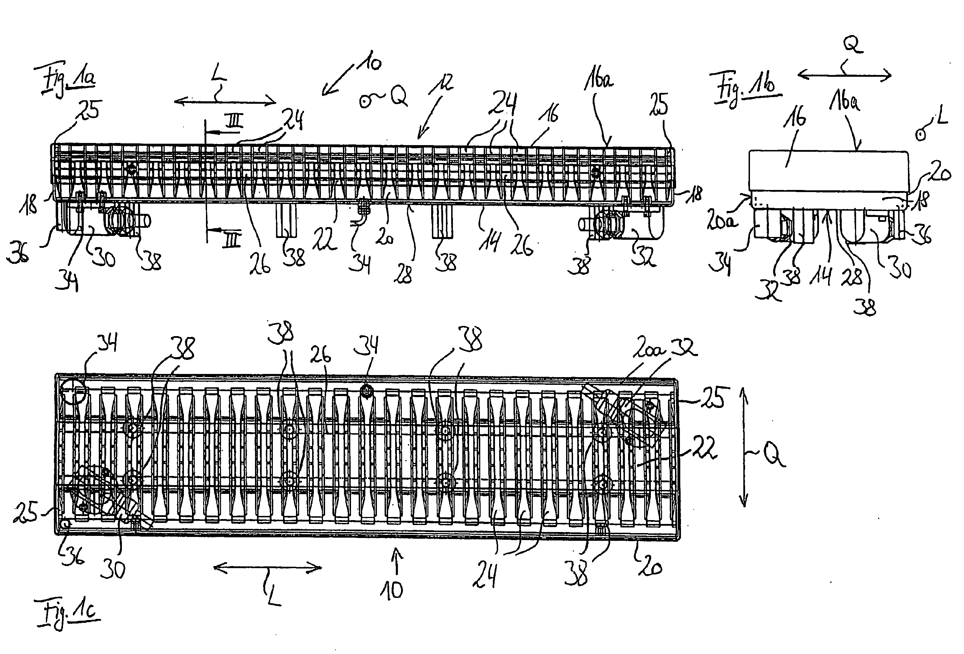

In Fig. 1a ist ein erfindungsgemäßer Stator allgemein mit 10 bezeichnet. Die Fig. 1a bis 1c zeigen ein Drahtmodell des betreffenden Stators. Dort ist ein Statorgehäuse 12 zu sehen, umfassend einen Statorboden 14 und einen Statordeckel 16. Die Oberseite 16a des Statordeckels ist die Läuferseite des Stators 10, d.h. die einem beweglichen Motor- oder Generatorteil zugewandte Seite. Der Statordeckel 16 umgreift Stirnseitenwände 18 und Querseitenwände 20, 20a des Statorbodens, sodass zusammen mit einer in den Stator eingefüllten und ausgehärteten Vergussmasse ein vollständig gegen die Umgebung gekapselter Stator gebildet ist.

Im Stator ist ein Statorkern 22 gehalten. Der Statorkern verläuft in Statorlängsrichtung L. Auf der der Läuferseite 16a nahen Seite des Statorkerns 22 ist eine Mehrzahl von Polschuhen 24 vorgesehen. Zwischen zwei Polschuhen 24 sind darüber hinaus Spulenkörper 26 auf den Statorkern 22 aufgeschoben. Die Spulenkörper 26 tragen die in Fig. 1 nicht dargestellten Wickelspulen. Diese umgeben den Kern. Es wird darauf hingewiesen, dass die in Statorlängsrichtung endseitigen Polschuhe 25 eine geringere Breite aufweisen als die dazwischenliegenden Polschuhe 24.

Der Bodenabschnitt 28 des Statorbodens 14 ist mit einer Mehrzahl von Vorrichtungen versehen, die für die Herstellung und für den Betrieb des Stators 10 von Bedeutung sind. An den Längsendbereichen des Stators sind Kabeldurchführungen 30 und 32 vorgesehen, durch welche die Stromzufuhrleitungen zu den Wickelspulen im Statorinneren geführt sind. Ein Erdungsanschluss 34 zur Erdung des Statorbodens 14 ist bei der Längsmitte des Stators angeordnet.

An einem Eckbereich des Bodenabschnitts 28 des Statorbodens 14 des Stators 10 ist ein Einfüllstutzen 34 zum Einfüllen von Vergussmasse ins Statorinnere vorgesehen. An dem in Statorquerrichtung Q gegenüberliegenden Eckbereich ist ein Entlüftungsrohr 36 zur Entlüftung von in dem Statorgehäuse 12 vorhandenem Gas bei Einfüllen von Vergussmasse ins Statorinnere vorgesehen. Darüber hinaus kann das Entlüftungsrohr 36 ebenso wie der Einfüllstutzen 34 zur Kontrolle dienen, ob ausreichend Vergussmasse in den Stator eingefüllt wurde.

Schließlich sind in Statorlängsrichtung L mit Abständen voneinander Befestigungsfüße 38 vorgesehen, welche zur Befestigung des Stators an einem Untergrund dienen. Insgesamt sind 8 Befestigungsfüße 38 vorgesehen, welche aus Paaren von in Statorquerrichtung Q mit Abstand voneinander angeordneten Befestigungsfüßen gebildet sind. Jeder Befestigungsfuß 38 weist eine Bohrung mit einem Innengewinde auf.

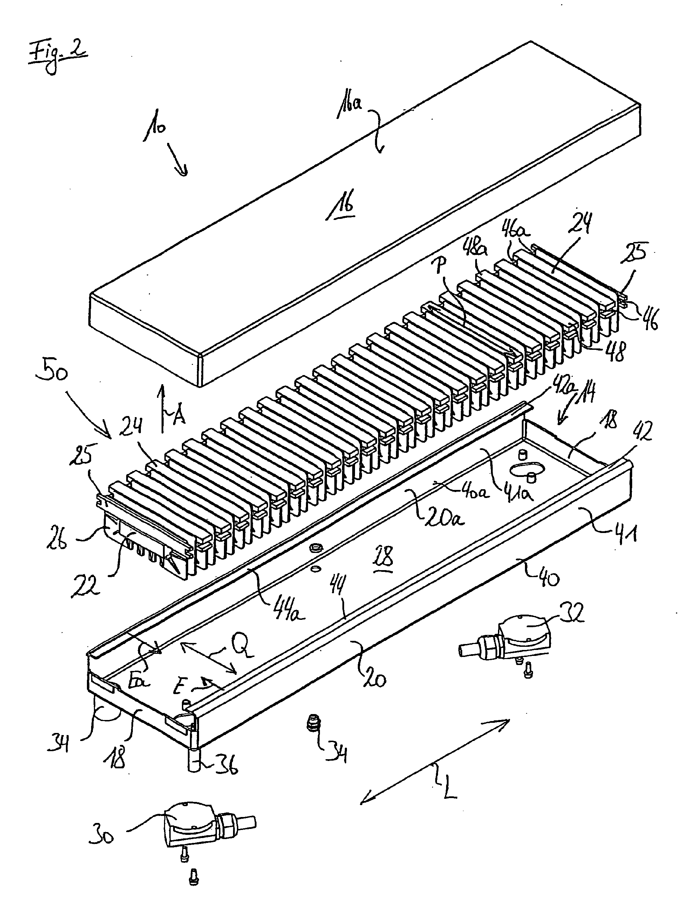

In Fig. 2 ist der Stator von Fig. 1 in einer Explosionsdarstellung gezeigt.

Der Statorboden 14 ist aus einem ausgestanzten Metallblech gebildet, bei welchem Blechabschnitte durch Umbiegen entlang von Biegekanten zu Seitenwänden 18, 20 und 20a umgebogen sind. Aus Blech können stabile Statorböden gefertigt werden, in welchen Kernpakete, umfassend einen Statorkern 22, Polschuhe 24 und 25 sowie Wickelspulen und Spulenkörper 26 sicher aufgenommen und gehalten werden können. Das Blech macht eine Erdung durch den Erdungsanschluss 34 aus Sicherheitsgründen erforderlich.

Die Seitenwände 20 und 20a des Statorbodens 14 sind, weil durch Umbiegen aus einem einstückigen Metallblech hervorgegangen, an einem jeweils zugeordneten Endbereich 40 bzw. 40A integral mit dem Bodenabschnitt 28 verbunden. Ein sich an jeder Seitenwand 20 und 20a im Wesentlichen über die gesamte Statorlängsrichtung L erstreckender freier Endabschnitt 42 bzw. 42a der Seitenwände 20 und 20a ist durch Biegen zu einem Vorsprung 44 bzw. 44a verformt. Zwischen den Endbereichen 40 und 40a sowie 42 bzw. 42a liegen Schenkelbereiche 41 bzw. 41 a. Die Verformung ist dabei derart, dass ein an einer Seitenwand 20, 20a ausgebildeter Vorsprung 44 bzw. 44a zur jeweils anderen Seitenwand hinweist. Die Stirnseitenwände 18 und die Querseitenwände 20, 20a sind jeweils zueinander paarweise parallel. Die freien Endbereiche 42 bzw. 42a der Seitenwände 20 und 20a bilden daher Haltebereiche an den Seitenwänden 20 und 20a zur Sicherung des Stators gegen ein Abheben von Polschuhen 24 und 25 vom Statorkern 22 in Richtung des Pfeils A zur Läuferseite 16a hin. Den Haltebereichen 42 und 42a zugeordnet sind Nuten 46 und 46a, in welche die Haltebereiche 42 und 42a im montierten Zustand des Stators 10 hineinragen.

Im montierten Zustand des Stators ragt der Vorsprung 44 in einer zur Statorquerrichtung Q parallelen Einführrichtung E in die diesem Vorsprung 44 zugeordneten Nuten 46 der Polschuhe 24 und 25. Ebenso ragt der weitere Vorsprung 44a des weiteren Haltebereichs 42a an der weiteren Seitenwand 20a in einer zur Statorquerrichtung Q parallelen weiteren Einführrichtung Ea in die ihm zugeordneten weiteren Nuten 46a der Polschuhe 24 und 25.

Die Polschuhe 24 und 25 sind im montierten Zustand des Stators 10 in ihrer Polschuhlängsrichtung P im Wesentlichen in Statorquerrichtung Q angeordnet. In diesem Anordnungszustand durchsetzen die Nuten 46 und 46a entgegengesetzte Längsendbereiche 48 und 48a in Statorlängsrichtung L. Dadurch ist es beispielsweise möglich, die Polschuhe 24 und 25 von einer Stirnseite des Statorbodens 14 auf die Haltebereiche 42 und 42a "aufzufädeln" und in Statorlängsrichtung L an die vorgesehene Stelle zu verschieben.

Zur Erzeugung von Wickelspulen am Stator ist es jedoch von Vorteil, wenn ein einen Statorkern 22, Statorspülen 26 und Polschuhe 24 und 25 umfassendes Kernpaket 50 in eine Wickelmaschine eingelegt werden kann. Nach dem Erzeugen der Wickelspulen sollte dann das gesamte Kernpaket in den Statorboden eingesetzt werden können.

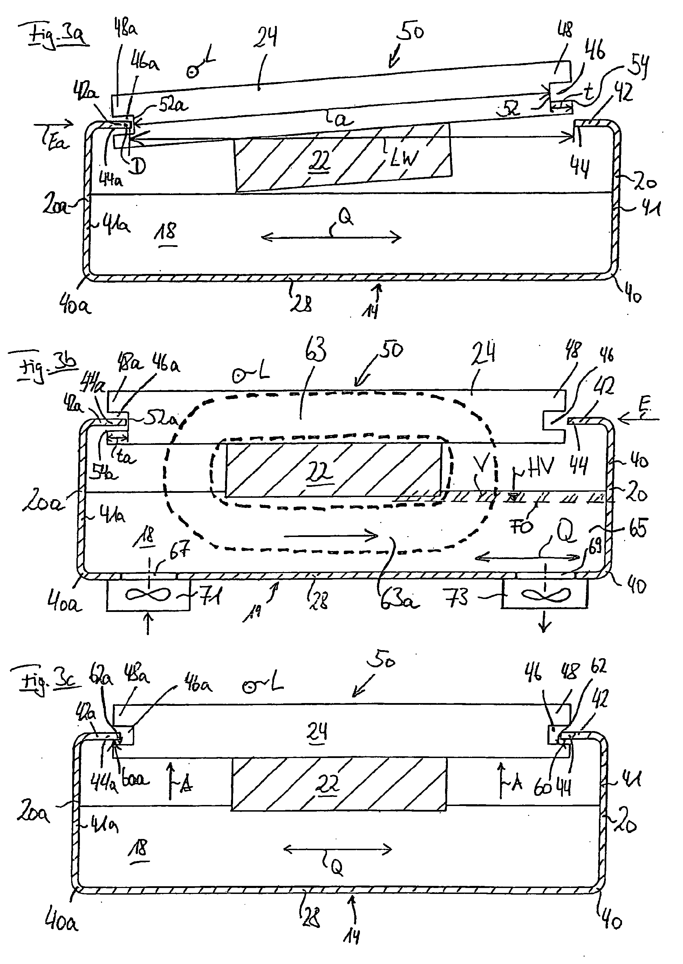

Eine Möglichkeit hierzu ist in den Fig. 3a bis 3c schematisch dargestellt. In Fig. 3a ist mit LW die lichte Weite zwischen den Vorsprüngen 44 und 44a d.h. der zwischen den Vorsprüngen bestehende Spaltabstand, bezeichnet. Mit a ist der Abstand vom Nutgrund 52 der Nut 46 zum Nutgrund 52a der weiteren Nut 46a bezeichnet. Die Tiefe der Nut 46, d.h. der Abstand vom läuferseitenfernen Nutrand 54 bis zum Nutgrund 52 der Nut 46, ist mit t bezeichnet. Ebenso ist, aus Gründen der Übersichtlichkeit in Fig. 3b dargestellt, die Tiefe der weiteren Nut 46a, d.h. der Abstand vom läuferseitenfernen Nutrand 54a bis zum Nutgrund 52a der weiteren Nut 46a, mit ta bezeichnet. Gemäß einer vorteilhaften Ausführungsform sind die Polschuhe 24 und 25 derart ausgebildet, dass der Abstand a + t vom Nutgrund 52a einer Nut, hier der weiteren Nut 46a, zum läuferseitenfernen Nutrand 54 der anderen Nut 46 kleiner bemessen ist als die lichte Weite LW zwischen den die Haltebereiche 42 und 42a bildenden Vorsprünge 44 und 44a. Damit ist es möglich, das gesamte Kernpaket von der Läuferseite her wie in den Fig. 3a bis 3c gezeigt, in den Statorboden einzusetzen. Aus Gründen der Übersichtlichkeit sind in den Fig. 3a bis 3c die Spulenkörper 26 nicht dargestellt.

Zunächst wird das Längsende 48a mit der weiteren Nut 46a auf den Vorsprung 44a aufgeschoben, sodass der Vorsprung 44a tief in der ihm zugeordneten Einführrichtung Ea in die weitere Nut 46a hineinragt. Dann wird das Kernpaket 50 um eine im Wesentlichen in Statorlängsrichtung L in der weiteren Nut 46a verlaufenden Drehachse D gedreht, bis der Vorsprung 44 des Haltebereichs 42 mit der Nut 46 in der diesem Paar aus Nut 46 und Vorsprung 44 zugeordneten Einführrichtung E fluchten. Anschließend wird das Kernpaket 50 parallel zu den Einführrichtungen E-und Ea verschoben, sodass beide Vorsprünge 44 und 44a in die -ihnen jeweils zugeordneten Nuten 46 und 46a der Polschuhe 24 und 25 hineinragen und somit einen Abschnitt der Polschuhe 24 und 25 hintergreifen. Somit bilden die Haltebereiche 42 und 42a körperliche Barrieren gegen ein Abheben der Polschuhe 24 und 25 vom Statorkern 22 in Richtung A zur Läuferseite hin. Ebenso wird dadurch ein Anheben des gesamten Kernpakets 50 begrenzt. Einer Anschlagfläche 60 am Vorsprung 44 des Haltebereichs 42 liegt dabei eine Anlagefläche 62 einer Nutbegrenzungsfläche der Nut 46 gegenüber. Gleiches gilt für die Situation am anderen Längsende 48a des Polschuhs 24. Dort liegt einer weiteren Anschlagfläche 60a des weiteren Vorsprungs 44a des weiteren Haltebereichs 42a eine weitere Anlagefläche 62a einer Begrenzungsfläche der weiteren Nut 46a gegenüber. Je nachdem, ob zwischen den Anschlagflächen 60 und 60a und den Anlageflächen 62 und 62a ein Abstand vorhanden ist oder nicht, liegen diese Flächen aneinander an oder kommen nach einem geringen Bewegungsweg in Anlage aneinander, wobei dann eine weitere Bewegung der Polschuhe 24 und 25 oder/und des Kernpakets 50 verhindert wird. Da jedoch in der Regel die Polschuhe 24 und 25 in einem von Vergussmasse ausgefüllten Bereich liegen, ist eine Bewegung der Polschuhe 24 und 25 oder gegebenenfalls des gesamten Kernpakets zusätzlich auch durch die Vergussmasse V erschwert, die, wie in Fig. 3b angedeutet, von der Läuferseite her wenigstens bis zur Höhe HV eingefüllt ist, bei welcher der Statorkern 22 allseitig von Vergussmasse V umgeben ist.

In Fig. 3b ist darüber hinaus strichliniert eine den Statorkern 22 umgebende Wickelspule 63 dargestellt. Fig. 3b stellt darüber hinaus eine weitere mögliche Ausführungsform des erfindungsgemäßen Stators dar, bei welchem zusätzlich eine Kühlung vorgesehen ist. Die dargestellte Kühleinrichtung ist aus Gründen der Übersichtlichkeit bei den Fig. 3a und 3c weggelassen, Fachleuten wird es jedoch selbstverständlich sein, dass die im Zusammenhang mit Fig. 3b erläuterte Kühleinrichtung entsprechend auch in den Fig. 3a und 3c vorhanden sein kann.

Durch die freie Oberfläche (Spiegel) FO der Vergussmasse V im Inneren des Stators 10 und den Bodenabschnitt 28 des Statorbodens 14 ist ein Hohlraum 65 begrenzt, welcher im Wesentlichen von Gas, wie etwa Luft, gefüllt ist.

Am Statorboden sind in Statorquerrichtung Q mit Abstand voneinander eine Kühlgaseinlassöffnung 67 und eine Kühlgasauslassöffnung 69 vorgesehen.

An der Außenseite des Statorbodens 28 ist an der Kühlgaseinlassöffnung 67 ein erster Ventilator 71 vorgesehen, welcher Umgebungsluft ins Statorinnere fördert. Entsprechend ist an der Außenseite des Statorbodens 28 an der Kühlgasauslassöffnung 69 ein zweiter Ventilator 73 vorgesehen, welcher erwärmtes Kühlgas aus dem Statorinneren in die Umgebungsluft fördert. Die Ventilatoren 71 und 73 sind elektrisch betrieben.

Durch diese beiden Ventilatoren 71 und 73 entsteht an der Stelle des dargestellten Schnitts von Fig. 3b ein in Statorquerrichtung Q verlaufender Kühlgas- genauer Kühlluftstrom, welcher den in den Hohlraum 65 hineinragenden Abschnitt 63a der Wickelspule 63 umspült und dabei konvektiv Wärme abführt.

Alternativ können, wenn im Statorinneren ausreichend Raum zur Verfügung steht, die Ventilatoren 71 und 73 auch an der Innenseite des Statorbodens oder sonst im Inneren des Stators vorgesehen sein. Darüber hinaus ist bevorzugt eine Mehrzahl von Paaren aus je einem kühlgaseintrittsseitigen Ventilator und einem kühlgasaustrittsseitigen Ventilator in Statorlängsrichtung L mit Abstand voneinander angeordnet. Besonders bevorzugt sind derartige Paare von Ventilatoren in gleichem Abstand über die gesamte Länge des Stators 10 angeordnet, da so ein sehr homogenes Gasströmungsprofil über die gesamte Länge des Stators 10 im Inneren des Stators 10 erhalten werden kann.

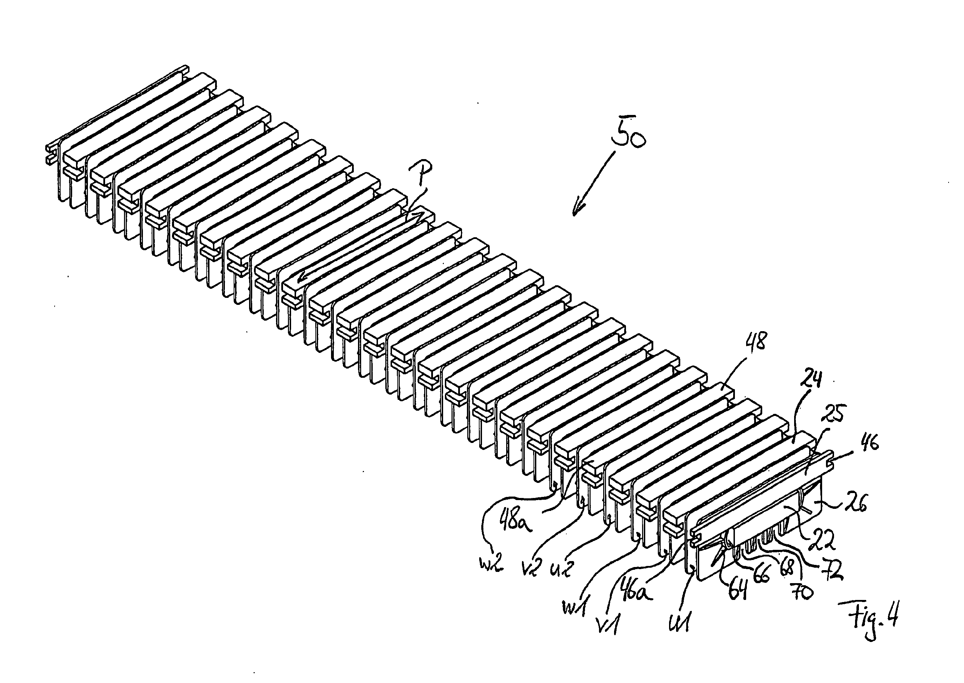

In Fig. 4 ist ein Kernpaket 50 vergrößert dargestellt. Dieses Kernpaket 50 kann, wie dargestellt, in eine Wickelmaschine eingelegt werden, wobei jeweils drei einander benachbarte Wickelspulen, die jeweils einer unterschiedlichen elektrischen Phase zugeordnet sind, gleichzeitig gewickelt werden. Nach Fertigstellung der drei Wicklungen erfolgt ein Vorschub des Kernpakets 50, sodass die nächsten drei Wickelspulen ohne Trennung des der jeweiligen elektrischen Phase zugeordneten Drahtes hergestellt werden können.

Beispielsweise werden in einem ersten Schritt an den Stellen u1, v1 und w1 je eine Wickelspule mit je einem den elektrischen Phasen u, v, w zugeordneten Draht gewickelt. Nach Fertigstellung der Wicklungen erfolgt ein Vorschub zu den Stellen u2, v2 bzw. w2, wobei mit ununterbrochenen Drähten für jede elektrische Phase je eine Wickelspule gewickelt wird. Die Abstände u1 - u2, v1 - v2 und w1 - w2 sind im Wesentlichen identisch und definieren das Vorschubmaß, um welches das Kempaket 50 nach Fertigstellung von drei Wicklungen weiterbewegt wird.

Die auf den Statorkern 22 aufgeschobenen Spulenkörper sind mit Rippen 64 verstärkt, welche strahlenförmig von einer zentralen Ausnehmung 66 in den Spulenkörpern ausgehen. Darüber hinaus sind in den Spulenkörpern an einer Seite Ausnehmungen 68, 70 und 72 vorgesehen, um durch diese die die einzelnen Wicklungsspulen verbindenden Drähte zu führen.

## Patentansprüche

1. Stator (10) für einen elektrischen Linearmotor oder einen Lineargenerator, welcher Stator (10) sich längs einer Statorlängsrichtung (L) erstreckt, mit einer Läuferseite (16a), welche im montierten Zustand des Motors oder Generators einem bewegten Läufer zugewandt ist, wobei der Stator (10) umfasst:
- einen in Statorlängsrichtung (L) verlaufenden Statorkem (22),
- eine Mehrzahl von in Statorlängsrichtung (L) aufeinander folgenden und mit Abstand voneinander angeordneten Polschuhen (24, 25), welche von dem Statorkern (22) zur Läuferseite (16a) hin abstehen,
- eine Mehrzahl von in Statorlängsrichtung (L) aufeinander folgenden und mit Abstand voneinander angeordneten Wickelspulen (63), welche zur Erzeugung eines elektromagnetischen Feldes mit einer Spannungsquelle verbunden oder verbindbar sind,
- einen Statorboden (14), welcher wenigstens eine längs der Statorlängsrichtung (L) verlaufende Seitenwand (20, 20a) und einen dieser benachbarten Bodenabschnitt (28) umfasst und an welchem der Statorkern (22), die Polschuhe (24, 25) und die Wickelspulen (63) aufgenommen sind,
wobei wenigstens ein Polschuh (24, 25) durch wenigstens ein Halteelement (42, 42a) gegen ein Abheben vom Statorkern (22) in Richtung (A) zu der Läuferseite (16a) hin gesichert ist, welches Halteelement (42, 42a) mit einem Eingriffsbereich (48, 48a) des wenigstens einen Polschuhs (48, 48a) zusammenwirkt,
**dadurch gekennzeichnet, dass** als das Halteelement (42, 42a) an wenigstens einer Seitenwand (20, 20a) des Statorbodens (14) ein Haltebereich (42, 42a) ausgebildet ist, wobei ein Bereich: Haltebereich (42, 42a) oder Eingriffsbereich (48, 48a), mit dem jeweils anderen Bereich derart kraftschlüssig oder formschlüssig in Eingriff ist, dass eine Bewegung zumindest des Eingriffsbereichs (48, 48a) des wenigstens einen Polschuhs (24, 25) in Richtung (A) vom Statorkern (22) weg und zu der Läuferseite (16a) hin begrenzt ist.

2. Stator nach Anspruch 1,
**dadurch gekennzeichnet, dass** ein Bereich: Haltebereich (42, 42a) oder Eingriffsbereich (48, 48a), in formschlüssigem Eingriff mit dem jeweils anderen Bereich ist.

3. Stator nach Anspruch 2,
**dadurch gekennzeichnet, dass** in einem Bereich: Haltebereich (42, 42a) oder Eingriffsbereich (48, 48a), vorzugsweise der Haltebereich (42, 42a), ein Vorsprung (44, 44a) ausgebildet ist, welcher den jeweils anderen Bereich, vorzugsweise den Eingriffsbereich (48, 48a), in Richtung (A) zur Läuferseite (16a) hintergreift.

4. Stator nach Anspruch 3,
**dadurch gekennzeichnet, dass** der jeweils andere, vom Vorsprung hintergriffene Bereich, vorzugsweise der Eingriffsbereich (48, 48a), eine Ausnehmung (46a, 46a) aufweist, in welche der Vorsprung (44, 44a) zum formschlüssigen Eingriff hineinragt.

5. Stator nach einem der vorhergehenden Ansprüche,
**dadurch gekennzeichnet, dass** die wenigstens eine Seitenwand (20, 20a) ein mit dem Bodenabschnitt (28) verbundenes Ende (40, 40a), ein freies Ende (42, 42a) und einen zwischen diesen Enden liegenden Schenkelbereich (41, 41a) aufweist, wobei der Haltebereich (42, 42a) ein das freie Ende (42, 42a) der Seitenwand (20, 20a) aufweisender, im Wesentlichen in Statorlängsrichtung (L) verlaufender Endbereich (42, 42a) der Seitenwand (20, 20a) ist.

6. Stator nach den Ansprüchen 4 und 5,
**dadurch gekennzeichnet, dass** als der Vorsprung (44, 44a) das freie Ende (42, 42a) der wenigstens einen Seitenwand (20, 20a) mit dem Haltebereich (42, 42a) bezüglich des Schenkelbereichs (41, 41 a) zum wenigstens einen Polschuh (24, 25) hin abgewinkelt ist.

7. Stator nach einem der vorhergehenden Ansprüche,
**dadurch gekennzeichnet, dass** ein weiteres Halteelement (42a) vorgesehen ist, welches mit einem weiteren Eingriffsbereich (48a) des wengistens einen Polschuhs (24, 25) zusammenwirkt und welches zumindest den weiteren Eingriffsbereich (48a) des wenigstens einen Polschuhs (24, 25) gegen ein Abheben vom Statorkern (22) in Richtung (A) zu der Läuferseite (16a) hin sichert.

8. Stator nach Anspruch 7,
**dadurch gekennzeichnet, dass** der Statorboden (14) wenigstens zwei Seitenwände (20, 20a) aufweist, wobei an einer Seitenwand (20) ein Haltebereich (42) als das Halteelement (42) und an einer weiteren Seitenwand (20a) ein weiterer Haltebereich (42a) als das weitere Halteelement (42a) ausgebildet ist.

9. Stator nach Anspruch 8,
**dadurch gekennzeichnet, dass** die beiden Seitenwände (20, 20a) im Wesentlichen parallel zueinander vorgesehen sind.

10. Stator nach Anspruch 9,
**dadurch gekennzeichnet, dass** die beiden Seitenwände (20, 20a) im Wesentlichen spiegelsymmetrisch zu einer in Statorlängsrichtung (L) verlaufenden und orthogonal zum Bodenabschnitt (14) orientierten Ebene vorgesehen sind.

11. Stator nach Anspruch nach einem der vorhergehenden Ansprüche,
**dadurch gekennzeichnet, dass** der wenigstens eine Polschuh (24, 25) ein längliches Element ist und der Eingriffsbereich (48, 48a) an wenigstens einem seiner Längsenden vorgesehen ist.

12. Stator nach einem der Ansprüche 4 bis 11, unter Einbeziehung des Anspruchs 4,
**dadurch gekennzeichnet, dass** die Ausnehmung (46, 46a) eine in eine Polschuhseite eingebrachte Nut (46, 46a) ist.

13. Stator nach Anspruch 11 und 12,
**dadurch gekennzeichnet, dass** der wenigstens eine Polschuh (24, 25) in seiner Längsrichtung (P) im Wesentlichen orthogonal zur Statorlängsrichtung (L) im Stator (10) orientiert ist, wobei die Nut (46, 46a) den Polschuh (24, 25) in Statorlängsrichtung (L) durchsetzend in einer zu der wenigstens einen Seitenwand (20 20a) weisenden Polschuhseite vorgesehen ist.

14. Stator nach einem der Ansprüche 9 bis 13,
**dadurch gekennzeichnet, dass** der wenigstens eine Polschuh zwei Eingriffsbereiche (48, 48a) aufweist.

15. Stator nach Anspruch 14,
**dadurch gekennzeichnet, dass** die zwei Eingriffsbereiche (48, 48a) an im Wesentlichen in entgegengesetzte Richtungen weisenden Polschuhseiten vorgesehen sind.

16. Stator nach Anspruch 14 oder 15,
**dadurch gekennzeichnet, dass** die zwei Eingriffsbereiche (48, 48a) mit je einer Ausnehmung (46, 46a) versehen sind.

17. Stator nach einem der Ansprüche 4 bis 16, unter Einbeziehung der Ansprüche 4 und 7,
**dadurch gekennzeichnet, dass** einer der Bereiche: Haltebereich (42) und Eingriffsbereich (48), eine Ausnehmung (46) aufweist und der jeweils andere dieser Bereiche einen Vorsprung (44) aufweist, welcher im montierten Zustand des Stators (10) in einer ersten Einführrichtung (E) in die Ausnehmung (46) hineinragt, und dass ebenso einer der weiteren Bereiche: weiterer Haltebereich (42a) und weiterer Eingriffsbereich (48a), eine weitere Ausnehmung (46a) aufweist und der jeweils andere dieser Bereiche einen weiteren Vorsprung (44a) aufweist, welcher im montierten Zustand des Stators (10) in einer zu der ersten Einführrichtung (E) parallelen, jedoch entgegengesetzt gerichteten zweiten Einführrichtung (Ea) in die weitere Ausnehmung (46a) hineinragt, wobei wenigstens ein Paar (46/44, 46a/44a) aus Ausnehmung (46, 46a) und zugeordnetem Vorsprung (44, 44a) derart bemessen sind, dass der Vorsprung (44, 44a) dieses Paars (46/44, 46a/44a) in die ihm jeweils zugeordnete Ausnehmung (46, 46a) soweit einführbar ist, dass der Vorsprung (44, 44a) des jeweils anderen Paars (46/44, 46a/44a) und die diesem zugeordnete Ausnehmung (46, 46a) außer Eingriff sind, jedoch in der zugeordneten Einführrichtung (E, Ea) fluchten.

18. Stator nach Anspruch 17 unter Einbeziehung des Anspruchs 8,
**dadurch gekennzeichnet, dass** der wenigstens eine Polschuh (24, 25) an zwei im Wesentlichen in entgegengesetzte Richtungen (P) weisenden Polschuhseiten Nuten (46, 46a) aufweist, welche sich jeweils in einer Nut-Tiefenrichtung (t) von einem Nutrand (54, 54a) an einer Außenfläche der zugeordneten Polschuhseite zu einem Nutgrund (52, 52a) aufeinander zu erstrecken, wobei die Tiefe (t, ta) wenigstens einer der Nuten (46, 46a) derart gewählt ist, dass der Abstand (t+a, ta+a) vom Nutgrund (52, 52a) der wenigstens einen Nut (46, 46a) zu dem läuferseitenfernen Nutrand (54, 54a) der jeweils anderen Nut (46, 46a) kleiner ist als die lichte Weite (LW) zwischen den Haltebereichen (42, 42a) der Seitenwände (20, 20a).

19. Stator nach Anspruch 18,
**dadurch gekennzeichnet, dass** die Tiefe (t, ta) beider Nuten (46, 46a) derart gewählt ist, dass der Abstand (t+a, ta+a) vom Nutgrund (52, 52a) der einen Nut (46, 46a) zu dem läuferseitenfernen Nutrand (54, 54a) der jeweils anderen Nut (46, 46a) kleiner ist als die lichte Weite (LW) zwischen den Haltebereichen (42, 42a) der Seitenwände (20, 20a).

20. Stator nach einem der vorhergehenden Ansprüche,
**dadurch gekennzeichnet, dass** eine Mehrzahl von Polschuhen (24, 25), vorzugsweise alle Polschuhe (24, 25) durch wenigstens einen Haltebereich (42, 42a), besonders bevorzugt durch zwei Haltebereiche (42, 42a) gegen in Abheben vom Statorkem (22) in Richtung (A) zu der Läuferseite (16a) hin gesichert sind.

21. Stator nach einem der vorhergehenden Ansprüche,
**dadurch gekennzeichnet, dass** die Wickelspulen (63) den Statorkern (22) umgeben und ein Abschnitt der Wickelspulen (63) zwischen zwei Polschuhen (24, 25) verläuft.

22. Stator nach einem der vorhergehenden Ansrpüche,
**dadurch gekennzeichnet, dass** der Statorboden (14) Teil eines Statorgehäuses (12) ist.

## Claims

1. A stator (10) for an electric linear motor or a linear generator, which stator (10) extends along a longitudinal direction (L) of the stator, with a rotor side (16a) which in the assembled condition of the motor or generator faces a moving rotor, wherein the stator (10) comprises:
- a stator core (22) extending in the stator longitudinal direction (L),
- a plurality of pole shoes (24,25) which follow one another in the stator longitudinal direction (L) and are arranged spaced apart, and which project from the stator core (22) towards the impeller side (16a),
- a plurality of winding coils (63) which follow one another in the stator longitudinal direction (L) and are arranged spaced apart, and which are or can be connected to a voltage source so as to create an electromagnetic field,
- a stator base (14) which comprises at least one side wall (20,20a), which extends along the stator longitudinal direction (L), and a base portion (28) adjacent this side wall and on which the stator core (22), the pole shoes (24,25) and the winding coils (63) are accommodated,
wherein at least one pole shoe (24,25) is secured by at least one retaining element (42,42a) from being lifted from the stator core (22) in the direction (A) towards the rotor side (16a), which retaining element (42,42a) co-operates with an engagement portion (48,48a) of the at least one pole shoe (48,48a),
**characterised in that** on at least one side wall (20,20a) of the stator base (14) a retaining portion (42,42a) is formed as the retaining element (42,42a), wherein one.portion: retaining portion (42,42a) or engagement portion (48,48a), is in force-locking or form-locking engagement with the respective other portion so as to limit any movement at least of the engagement portion (48,48a) of the at least one pole shoe (24,25) in the direction (A) away from the stator core (22) and towards the rotor side (16a).

2. A stator according to Claim 1, **characterised in that** one portion: retaining portion (42,42a) or engagement portion (48, 48a), is in form-locking engagement with the respective other portion.

3. A stator according to Claim 2, **characterised in that** in one portion: retaining portion (42,42a) or engagement portion (48,48a), preferably the retaining portion (42,42a), a projection (44,44a) is formed which engages behind the respective other portion, preferably the engagement portion (48,48a), in the direction (A) towards the rotor side (16a).

4. A stator according to Claim 3, **characterised in that** the respective other portion behind which the projection engages, preferably the engagement portion (48,48a), has a recess (46,46a) into which the projection (44,44a) engages for form-locking engagement.

5. A stator according to any one of the preceding Claims, **characterised in that** the at least one side wall (20,20a) has an end (40,40a) connected to the base portion (28), a free end (42,42a) and an arm portion (41,41a) disposed between these ends, wherein the retaining portion (42,42a) is an end portion (42,42a) of the side wall (20,20a), which has the free end (42,42a) of the side wall (20,20a) extending substantially in the stator longitudinal direction (L).

6. A stator according to Claims 4 and 5, **characterised in that** as the projection (44,44a) the free end (42,42a) of the at least one side wall (20,20a) with the retaining portion (42,42a) is bent relative to the arm portion (41,41a) towards the at least one pole shoe (24,25).

7. A stator according to any one of the preceding Claims, **characterised in that** a further retaining element (42a) is provided, which co-operates with a further engagement portion (48a) of the at least one pole shoe (24,25) and which secures at least the other engagement portion (48a) of the least one pole shoe (24,25) from being lifted from the stator core (22) in the direction (A) towards the rotor side (16a).

8. A stator according to Claim 7, **characterised in that** the stator base (14) has at least two side walls (20,20a), wherein on one side wall (20) a retaining portion (42) is formed as the retaining element (42) and on another side wall (20a) another retaining portion (42a) is formed as another retaining element (42a).

9. A stator according to Claim 8, **characterised in that** the two side walls (20,20a) are provided substantially parallel to one another.

10. A stator according to Claim 9, **characterised in that** the two side walls (20,20a) are provided substantially mirror-symmetrical to a plane extending in the stator longitudinal direction (L) and orientated orthogonally to the base portion (14).

11. A stator according to any one of the preceding Claims, **characterised in that** the at least one pole shoe (24,25) is an elongate element and the engagement portion (48,48a) is provided on at least one of its longitudinal ends.

12. A stator according to any one of Claims 4 to 11, inclusive of Claim 4, **characterised in that** the recess (46,46a) is a groove incorporated in one pole shoe side.

13. A stator according to Claims 11 and 12, **characterised in that** at least one pole shoe (24,25) is orientated in its longitudinal direction (P) substantially orthogonally to the stator longitudinal direction (L) in the stator (10), wherein the groove (46,46a) is provided passing through the pole shoe (24,25) in the stator longitudinal direction (L) in one pole shoe side facing towards the at least one side wall (20,20a).

14. A stator according to any one of Claims 9 to 13, **characterised in that** the at least one pole shoe has at least two engagement portions (48,48a).

15. A stator according to Claim 14, **characterised in that** the two engagement portions (48,48a) are provided on pole shoe sides facing substantially in opposite directions.

16. A stator according to Claim 14 or 15, **characterised in that** the two engagement portions (48,48a) are provided with a respective recess (46,46a).

17. A stator according to any one of Claims 4 to 16, inclusive of Claims 4 and 7, **characterised in that** one of the portions: retaining portion (42) and engagement portion (48), has a recess (46) and the respective other one of these portions has a projection (44) which in the assembled condition of the stator (10) projects in a first insertion direction (E) into the recess (46), and **in that** likewise one of the other portions: further retaining portion (42a) and further engagement portion (48a), has a further recess (46a) and the respective other one of these portions has a further projection (44a) which in the assembled condition of the stator (10) projects into the further recess (46a) in a second insertion direction (Ea) directed parallel but opposed to the first insertion direction (E), wherein at least one pair (46/44, 46a,44a) comprising recess (46,46a) and associated projection (44,44a) are of such dimensions that the projection (44,44a) of this pair (46,44, 46a/44a) can be inserted so far into the respective recess (46,46a) associated therewith that the projection (44,44a) of the respective other pair (46,44,46a/44a) and the recess (46,46a) associated therewith are out of engagement but are in alignment in the associated insertion direction (E,Ea).

18. A stator according to Claim 17 inclusive of Claim 8, **characterised in that** on two pole shoe sides facing in opposite directions (P) the at least one pole shoe (24,25) has grooves (46,46a) which each extend towards one another in a groove depth direction (t) from one groove edge (54,54a) on an outer surface of the associated pole shoe side towards a groove bottom (52,52a), wherein the depth (t,ta) of at least one of the grooves (46,46a) is chosen so that the distance (t+a,ta+a) from the groove bottom (52,52a) of at least one groove (46,46a) to the groove edge (54,54a), remote from the rotor side, of the respective other groove (46,46a) is smaller than the clear width (LW) between the retaining portions (42,42a) of the side walls (20,20a).

19. A stator according to Claim 18, **characterised in that** the depth (t,ta) of both grooves (46,46a) is chosen so that the distance (t+a,ta+a) from the groove bottom (52,52a) of one groove (46, 46a) to the groove edge (54,54a), remote from the rotor side, of the respective other groove (46,46a) is smaller than the clear width (LW) between the retaining portions (42, 42a) of the side walls (20, 20a).

20. A stator according to any one of the preceding Claims, **characterised in that** a plurality of pole shoes (24,25), preferably all the pole shoes (24,25), are secured by at least one retaining portion (42,42a), especially preferably by two retaining portions (42,42a), from being lifted from the stator core (22) in the direction (A) towards the rotor side (16a).

21. A stator according to any one of the preceding Claims, **characterised in that** the winding coils (63) surround the stator core (22) and a portion of the winding coils (63) extends between two pole shoes (24,25).

22. A stator according to any one of the preceding Claims, **characterised in that** the stator base (14) is a part of a stator housing (12).

## Revendications

1. Stator (10) pour un moteur linéaire électrique ou un générateur linéaire, lequel stator (10) s'étend le long d'une direction longitudinale (L) du stator, avec un côté rotor (16a) qui, dans la position montée du moteur ou du générateur, est orienté vers un rotor en mouvement, le stator (10) comportant :
- un noyau de stator (22) orienté dans la direction longitudinale (L) du stator,
- une pluralité de pièces polaires (24, 25), qui se succèdent dans la direction longitudinale (L) du stator et sont situées à distance les unes des autres et qui sont en saillie sur le noyau de stator (22) vers le côté rotor (16a),
- une pluralité de bobines d'enroulement (63), qui se succèdent dans la direction longitudinale (L) du stator et sont situées à distance les unes des autres et qui sont reliées ou peuvent être reliées à une source de tension en vue de générer un champ électromagnétique,
- un fond de stator (14), qui comporte au moins une paroi latérale (20, 20a), orientée le long de la direction longitudinale (L) du stator, et une partie de fond (28), adjacente à cette dernière, et sur lequel sont logés le noyau de stator (22), les pièces polaires (24, 25) et les bobines d'enroulement (63),
au moins une pièce polaire (24, 25) étant bloquée par au moins un élément de fixation (42, 42a) pour empêcher que le noyau de stator (22) se soulève dans la direction (A) vers le côté rotor (16a), lequel élément de fixation (42, 42a) coopère avec une zone d'engagement (48, 48a) de ladite au moins une pièce polaire (24, 25),
**caractérisé en ce qu'**une zone de fixation (42, 42a) est réalisée sur au moins une paroi latérale (20, 20a) du fond de stator (14) pour former l'élément de fixation (42, 42a), sachant qu'une zone, la zone de fixation (42, 42a) ou la zone d'engagement (48, 48a), est en prise par friction ou emboîtement avec respectivement l'autre zone, de telle sorte qu'un mouvement d'au moins la zone d'engagement (48, 48a) de ladite au moins une pièce polaire (24, 25) est limité dans la direction (A) pour s'écarter du noyau de stator (22) et s'approcher du côté rotor (16a).

2. Stator selon la revendication 1, **caractérisé en ce qu'**une zone, la zone de fixation (42, 42a) ou la zone d'engagement (48, 48a), est en prise par emboîtement avec respectivement l'autre zone.

3. Stator selon la revendication 2, **caractérisé en ce que** dans une zone, la zone de fixation (42, 42a) ou la zone d'engagement (48, 48a); de préférence la zone de fixation (42, 42a), est réalisée une saillie (44, 44a), qui s'engage respectivement derrière l'autre zone, de préférence la zone d'engagement (48, 48a), dans la direction (A) vers le côté rotor (16a).

4. Stator selon la revendication 3, **caractérisé en ce que** respectivement l'autre zone, enserrée par l'arrière par la saillie, de préférence la zone d'engagement (48, 48a), comporte un évidement (46, 46a), dans lequel la saillie (44, 44a) s'engage par emboîtement.

5. Stator selon l'une quelconque des revendications précédentes, **caractérisé en ce que** ladite au moins une paroi latérale (20, 20a) comporte une extrémité (40, 40a) reliée à la partie de fond (28), une extrémité libre (42, 42a) et une branche (41, 41a) située entre ces extrémités, la zone de fixation (42, 42a) étant une zone d'extrémité (42, 42a) de la paroi latérale (20, 20a) qui comporte l'extrémité libre (42, 42a) de la plaque de support (20, 20a) et est orientée sensiblement dans la direction longitudinale (L) du stator.

6. Stator selon les revendications 4 et 5, **caractérisé en ce que** l'extrémité libre (42, 42a) de ladite au moins une paroi latérale (20, 20a) avec la zone de fixation (42, 42a) est pliée par rapport à la branche (41, 41a) vers ladite moins une pièce polaire (24, 25) pour former la saillie (44, 44a).

7. Stator selon l'une quelconque des revendications précédentes, **caractérisé en ce qu'**il est prévu un autre élément de fixation (42a), qui coopère avec une autre zone d'engagement (48a) de ladite au moins une pièce polaire (24, 25) et qui bloque au moins l'autre zone d'engagement (48a) de ladite au moins une pièce polaire (24, 25) pour empêcher que le noyau de stator (22) se soulève dans la direction (A) vers le côté rotor (16a).

8. Stator selon la revendication 7, **caractérisé en ce que** le fond de stator (14) comporte au moins deux parois latérales (20, 20a), une zone de fixation (42) formant l'élément de fixation (42) étant réalisée sur une paroi latérale (20), et une autre zone de fixation (42a) formant l'autre élément de fixation (42a) étant réalisée sur l'autre paroi latérale (20a).

9. Stator selon la revendication 8, **caractérisé en ce que** les deux parois latérales (20, 20a) sont prévues sensiblement parallèles l'une à l'autre.

10. Stator selon la revendication 9, **caractérisé en ce que** les deux parois latérales (20, 20a) sont orientées sensiblement symétriquement à un plan s'étendant dans la direction longitudinale (L) du stator et orienté orthogonalement à la partie de fond (14).

11. Stator selon l'une quelconque des revendications précédentes, **caractérisé en ce que** ladite au moins une pièce polaire (24, 25) est un élément allongé et la zone d'engagement (48, 48a) est prévue sur au moins l'un de ses extrémités longitudinales.

12. Stator selon l'une quelconque des revendications 4 à 11, en incluant la caractéristique 4, **caractérisé en ce que** l'évidement (46, 46a) est une rainure (46, 46a) ménagée dans un côté de la pièce polaire.

13. Stator selon les revendications 11 et 12, **caractérisé en ce que** ladite au moins une pièce polaire (24, 25) dans son sens longitudinal (P) est orientée sensiblement orthogonalement à la direction longitudinale (L) du stator, la rainure (46, 46a) étant prévue dans un côté de la pièce polaire orienté vers ladite au moins une paroi latérale (20, 20a) en passant à travers la pièce polaire (24, 25) dans la direction longitudinale (L) du stator.

14. Stator selon l'une quelconque des revendications 9 à 13, **caractérisé en ce que** ladite au moins une pièce polaire comporte deux zones d'engagement (48, 48a).

15. Stator selon la revendication 14, **caractérisé en ce que** les deux zones d'engagement (48, 48a) sont prévues sur des côtés de la pièce polaire orientées sensiblement dans des directions opposées.

16. Stator selon la revendication 14 ou 15, **caractérisé en ce que** les deux zones d'engagement (48, 48a) sont munies chacune d'un évidement (46, 46a).

17. Stator selon l'une quelconque des revendications 4 à 16, en incluant les revendications 4 et 7, **caractérisé en ce que** l'une des zones, la zone de fixation (42) et la zone d'engagement (48), comporte un évidement (46) et respectivement l'autre zone comporte une saillie (44) qui, à l'état monté du stator (10), s'engage dans une première direction d'introduction (E) dans l'évidement (46), et **en ce qu'**également l'une des autres zones, l'autre zone de fixation (42a) et l'autre zone d'engagement (48a), comporte un autre évidement (46a) et respectivement l'autre zone comporte une autre saillie (44a) qui, à l'état monté du stator (10), s'engage dans l'autre évidement (46a) dans une deuxième direction (Ea) parallèle à la première direction d'introduction (E), mais orientée dans le sens opposé, sachant qu'au moins une paire (46/44, 46a/44a), formée par un évidement (46, 46a) et la saillie (44; 44a) associée, est dimensionnée de telle sorte que la saillie (44, 44a) de cette paire (46/44, 46a/44a) peut être introduite dans l'évidement (46, 46a) qui lui est associé sur une profondeur telle que la saillie (44, 44a) de respectivement l'autre paire (46/44, 46a/44a) et l'évidement (46, 46a), qui est associé à celle-ci, ne sont pas en prise, mais sont alignées dans la direction d'introduction (E, Ea) associée.

18. Stator selon la revendication 17, en incluant la revendication 8, **caractérisé en ce que** ladite au moins une pièce polaire (24, 25), sur deux côtés de la pièce polaire orientés sensiblement dans des directions (P) opposées, comporte des rainures (46, 46a) qui s'étendent chacune l'une vers l'autre dans une direction en profondeur (t) depuis un bord de rainure (54, 54a) sur une surface extérieure du côté de la pièce polaire associé, vers un fond de rainure (52, 52a), la profondeur (t, ta) d'au moins une des rainures (46, 46a) étant choisie de telle sorte que la distance (t+a, ta+a) depuis le fond de rainure (52, 52a) de ladite au moins une rainure (46, 46a) vers le bord de rainure (54, 54a), éloigné du côté rotor, de respectivement l'autre rainure (46, 46a) est plus petite que la largeur intérieure (LW) entre les zones de fixation (42, 42a) des parois latérales (20, 20a).

19. Stator selon la revendication 18, **caractérisé en ce que** la profondeur (t, ta) des deux rainures (46, 46a) est choisie de telle sorte que la distance (t+a, ta+a) depuis le fond de rainure (52, 52a) de l'une des rainures (46, 46a) vers le bord de rainure (54, 54a), éloigné du côté rotor, de respectivement l'autre rainure (46, 46a) est plus petite que la largeur intérieure (LW) entre les zones de fixation (42, 42a) des parois latérales (20, 20a).

20. Stator selon l'une quelconque des revendications précédentes, **caractérisé en ce qu'**une pluralité de pièces polaires (24, 25), de préférence toutes les pièces polaires (24, 25), sont bloquées par au moins une zone de fixation (42; 42a), de manière particulièrement préférée par deux zones de fixation (42, 42a) pour empêcher que le noyau de stator (22) se soulève dans la direction (A) vers le côté rotor (16a).

21. Stator selon l'une quelconque des revendications précédentes, **caractérisé en ce que** les bobines d'enroulement (63) entourent le noyau de stator (22) et une partie des bobines d'enroulement (63) s'étend entre deux pièces polaires (24, 25).

22. Stator selon l'une quelconque des revendications précédentes, **caractérisé en ce que** le fond du stator (14) est une partie d'un carter de stator (12).
